# EUROPÄISCHE PATENTSCHRIFT

(11) **EP 0 986 964 B1**
(45) Veröffentlichungstag und Bekanntmachung des Hinweises auf die Patenterteilung: **26.11.2003**
(21) Anmeldenummer: 99117616.5
(22) Anmeldetag: 07.09.1999
(51) Int. Cl.: A23L 1/314, A23L 1/317, A23J 3/22

(54) **Fleischprodukt mit einem Gehalt von weniger als 0,5 Gew.-% Fett**
Meat product containing less than 0.5% fat by weight
Produit à base de viande ayant une teneur en matiére grasse inférieure à 0.5 % en masse

(30) Priorität: 08.09.1998 DE 19840739
(43) Veröffentlichungstag der Anmeldung: 22.03.2000
(73) Patentinhaber: Zimbo fleisch- und Wurstwaren GmbH & Co. KG, 44805 Bochum (DE)
(72) Erfinder: Zimmermann, Reinhold, 58511 Lüdenscheid (DE)
(74) Vertreter: Thiel, Christian, Dr. Dipl.-Chem.

(56) Entgegenhaltungen:
- EP-A- 0 279 883
- EP-A- 0 342 972
- US-A- 3 873 740
- US-A- 4 105 803
- US-A- 4 880 654

## Beschreibung

Die Erfindung betrifft ein Fleischprodukt, insbesondere eine Dauerbrühwurst, mit einem Gehalt von weniger als 0,5 Gew.-% Fett, bezogen auf das fertige Produkt.

Es ist allgemein anerkannt, daß ein zu hoher Fettverzehr Herz- und Kreislauferkrankungen auslösen kann. Fettreiche Nahrung wird weiterhin mit Krebserkrankungen in Verbindung gebracht. Hoher Fettverzehr stellt damit ein wesentliches gesundheitliches Risiko dar. Insoweit besteht ein Bedarf an Nahrungsmitteln, deren Fettgehalt so weit als möglich reduziert ist.

Fettreduzierte Nahrungsmittel spielen eine zunehmende Rolle in der Ernährung gesundheitsbewußter Konsumenten und in der Diätetik zur Vorbeugung oder Beseitigung von Krankheitserscheinungen. Zahlreiche Beispiele fettreduzierter Nahrungsmittel, insbesondere auf Fleischbasis sind im Handel. "Fettreduziert" bedeutet im allgemeinen ein Fettgehalt von weniger als 20 Gew.-%. Als "fettarm" werden Fleischerzeugnisse mit weniger als 10 Gew.-% Fett bezeichnet.

Nichtsdestoweniger ist es außerordentlich schwierig, den Fettgehalt von Fleischprodukten auf einen Wert von weniger als 10 Gew.-% zu reduzieren. Zum einen bedeutet der Verzicht auf Fettanteile in aller Regel auch einen Verlust der gewohnten organoleptischen Eigenschaften. Es tritt nicht nur eine Veränderung des gewohnten Geschmacks auf, sondern auch ein weitgehend anderes Mundgefühl, was beim Konsumenten zu Akzeptanzproblemen führt. Zum anderen ist der Fettgehalt verarbeiteter Fleischwaren vielfach für die Bindigkeit und Streichfähigkeit verantwortlich. Dies bedeutet, daß der Fettgehalt, insbesondere in Wurst und Pasteten nicht beliebig abgesenkt werden kann, ohne den Zusammenhalt und die Konsistenz des Produktes nachhaltig zu verändern. Zwar ist es möglich, hier durch geeignete Verarbeitungsschritte einen gewissen Ausgleich zu schaffen, beispielsweise durch Kuttern und die Temperaturführung bei der Verarbeitung, auch durch mikrobiologische Behandlung, jedoch enden diese Möglichkeiten bei einem Fettgehalt von etwa 10 Gew.-%. Durch Zusatzstoffe, insbesondere pflanzliche Stärke und Fettersatzstoffe ist es möglich, den Fettgehalt weiter abzusenken, jedoch ist hier eine Grenze bei etwa 5 Gew.-% erreicht. Bei einem Fettgehalt von weniger als 5 Gew.-% treten in der Regel ganz erhebliche Qualitätseinbußen auf, was Geschmack, Mundgefühl und Konsistenz des Produktes angeht.

Darüber hinaus können Wurstwaren aus extrem fettarmen Fleischteilen hergestellt werden, beispielsweise Muskelfleisch von Rindern und Geflügel mit einem Fettgehalt von weniger als 2 Gew.-%. Dieser geringe Fettgehalt kann darüber hinaus durch verfahrenstechnische Maßnahmen, wie Erhitzen und Zentrifugieren, auf Werte von 1 % abgesenkt werden. Die so hergestellten Fleischprodukte sind in aller Regel aber nicht zur Herstellung von Wurstwaren geeignet, die sensorisch mit fettreicheren Produkten mithalten können. Insbesondere fehlen diesen Produkten die vom Konsumenten gewünschten durch einen Mindestfettgehalt verliehenen organoleptischen Eigenschaften.

Die Herstellung fettreduzierter Brühwurstprodukte, insbesondere auch von Dauerbrühwurst, mit den verkehrsüblichen Qualitätsmerkmalen ist technologisch weitgehend unproblematisch. Schwierig ist dagegen die Erzeugung fettarmer Erzeugnisse. Dann ergeben sich gegenüber der gewohnten Herstellung Probleme bei der Bindung, Farbbildung und -haltung und im Geschmacksbild. Die technologische Grenze der Fettreduzierung bei Brühwurst liegt bei etwa 10 % Fett im fertigen Produkt und ist damit identisch mit den lebensmittelrechtlichen Vorstellungen von "fettarmen" Erzeugnissen.

Die Verminderung des Fettgehaltes hat vor allem Einfluß auf das Würzverhalten. Insbesondere läßt die Verminderung des Fettgehaltes den Salzgeschmack stärker hervortreten, weshalb es bei fettarmen Produkten nötig ist, die Salzzugabe um etwa 20 bis 25 % zu verringern. Dieser verminderte Salzgehalt hat aber einen erheblichen Einfluß auf die Wasserbindung und die Farbe. Die Wasserbindefähigkeit eines Brühwurstbrätes ist bekanntlich vor allem von seinem Gehalt an Fleischeiweiß und Kochsalz abhängig. Bindungsmängel bei fettreduzierten Produkten resultieren vor allem aus dem aus Geschmacksgründen reduzierten Kochsalzgehalt und damit aus der Verminderung der Ionenstärke des Brätes. Dazu kommt, daß durch den Ersatz von Fett durch Fleisch der Wassergehalt des Brätes automatisch ansteigt. Der verminderten Wasserbindefähigkeit eines fettarmen Produktes steht somit der automatisch erhöhte Wassergehalt gegenüber. Trotz dieses Sachverhaltes hinterlassen aber fettarme Wurstprodukte in der Regel einen trockenen Eindruck.

Es besteht somit ein Bedarf an Fleischprodukten, insbesondere Wurstwaren, die einen so weitgehend verminderten Fettgehalt aufweisen, daß sie als "praktisch fettfrei" bezeichnet werden können, jedoch die sensorischen Eigenschaften eines normalen fetthaltigen Fleischprodukts aufweisen. Aus optischen und sensorischen Gründen ist es insbesondere bei Dauerbrühwurst erforderlich, einen Fettersatzstoff einzubringen, der - ohne Qualitätseinbußen - dem Konsumenten einen erhöhten Fettgehalt suggeriert. Gleichzeitig sollen solche Fleischprodukte ein Bindeverhalten aufweisen, das eine normale Verarbeitbarkeit gewährleistet.

Ein Fleischprodukt, das diesen Anforderungen genügt, enthält 30 bis 77 Gewichtsteile Fleischmasse, 10 bis 40 Gewichtsteile Speckimitat, 10 bis 30 Gewichtsteile pflanzliches Eiweiß, 1 bis 2 Gewichtsteile Pökelsalz und 2 bis 6 Gewichtsteile übliche Zutaten, wobei die Fleischmasse aus 50 bis 100 Gew.-% magerem Fleisch und 0 bis 50 Gew.-% Protein besteht und das Speckimitat 50 bis 70 Gew.-% Wasser, 5 bis 25 Gew.-% Milch- und/oder Eieiweiß und 5 bis 25 Gew.-% pflanzliches Eiweiß enthält.

Das erfindungsgemäße Fleischprodukt ist insbesondere zur Herstellung von Dauerbrühwurst mit einem maximalen Fettgehalt von weniger als 0,5 Gew.-% geeignet.

Falls erwünscht, kann das so zusammengesetzte fertige Fleischprodukt zusätzlich noch bis zu 30 Gewichtsteile in der Fleischwarenherstellung übliche geschmacksgebende Zutaten enthalten, wie beispielsweise Einlagen aus bis zu mittelgroßen Fleischstücken, Gemüse, Ei, Pilzen und dergleichen. Des weiteren kann das Fleischprodukt übliche Mengen zugesetztes Wasser enthalten.

Als mageres Fleisch für die Fleischmasse kommt insbesondere Muskelfleisch von Rind, Schwein und Geflügel in Frage, das von anhaftenden Fettbestandteilen und Sehnen befreit ist. Ein solches mageres Fleisch kann insbesondere auf einen Fettgehalt von 1,5 bis 2 Gew.-% eingestellt werden. Voraussetzung ist, daß das sichtbar anhaftende Fett weitgehend entfernt ist. zurück bleibt lediglich der intramuskuläre Fettgehalt.

Die Fleischmasse enthält darüber hinaus bis zu 50 Gew.-%, insbesondere 5 bis 50 Gew.-% Protein, insbesondere tierisches oder pflanzliches Proteinhydrolysat, -konzentrat oder -isolat. Bevorzugt ist Getreide- oder Sojaproteinisolat. Solche Proteinisolate sind kommerziell erhältlich. Mit den Isolaten kann insbesondere eine weitere Verminderung des Fettgehaltes herbeigeführt werden. In jedem Fall ergibt sich aber eine Verbesserung der Gerüststruktur des Fleischproduktes.

Daneben enthält das erfindungsgemäße Fleischprodukt 10 bis 30 Gewichtsteile pflanzliches Eiweiß, vorzugsweise als Extrudat von Weizen- und/oder Sojaeiweiß. Solche Eiweißextrudate werden vielfach als Fleischimitat eingesetzt und besitzen eine fleischfaserähnliche Struktur, die sich positiv auf die sensorischen Eigenschaften des erfindungsgemäßen Fleischproduktes auswirkt.

Des weiteren enthält das erfindungsgemäße Fleischprodukt 10 bis 40 Gewichtsteile eines Speckimitats, das selbst 50 bis 70 Gew.-% Wasser, 5 bis 25 Gew.-% Milch- und/oder Eieiweiß sowie 5 bis 25 Gew.-% pflanzliches Eiweiß enthält. Bei dem Speckimitat handelt es sich um ein koaguliertes Eiweißprodukt, das durch Aufquellen der Eiweißbestandteile in dem Wasser, Erhitzen der Mischung auf eine zur Koagulation ausreichende Temperatur, in der Regel etwa 70°C, Abkühlen auf eine Temperatur im Bereich von -10 bis 10°C und Zerkleinern auf die gewünschte Korngröße erhältlich ist. Das Produkt hat das Aussehen von Speckstückchen, wie sie in Dauerbrühwurst und anderen speckhaltigen Fleischprodukten zum Einsatz kommen und verfügt über vergleichbare sensorische Eigenschaften.

Darüber hinaus enthält das erfindungsgemäße Fleischprodukt übliche Zusätze, wie 1 bis 2 Gewichtsteile Nitritpökelsalz, zweckmäßigerweise jodiert, 1 bis 2 Gew.-% Zucker, 1 bis 3 Gew.-% Gewürze, 0,1 bis 0,5 Gew.-% Farbstoff und 0,1 bis 0,5 Gew.-% Säuerungsmittel, insbesondere Gluconsäure-δ-lacton.

Die Erfindung betrifft ferner ein Speckimitat, das 50 bis 70 Gew.-% Wasser, 15 bis 25 Gew.-% Milch- und/oder Eieiweiß und 15 bis 25 Gew.-% pflanzliches Eiweiß enthält. Das Speckimitat kann darüber hinaus in geringen Mengen Gewürze, insbesondere Salz enthalten. Erhältlich ist dieses Speckimitat durch Aufquellen lassen der Eiweißkomponenten in dem Wasser, Erhitzen der Mischung auf etwa 70°C, Abkühlen der Mischung auf eine Temperatur von -10 bis 10°C und Zerkleinern, insbesondere Zerschneiden auf eine zuträgliche Körnung, wie sie typisch für Speckeinlagen in Fleischwaren ist, insbesondere in Brüh-, Roh- und Kochwurst. Die Speckimitatteilchen können beispielsweise in Korngrößen von im Mittel 1 mm bis 10 mm oder mehr gebracht werden. Das Speckimitat ist insbesondere für die erfindungsgemäße Dauerbrühwurst geeignet, kann aber beispielsweise auch in andere Fleischwaren eingearbeitet werden, in alle Brüh-, Roh- und Kochwürste, in denen sichtbare Speckeinlagen üblich sind. Insoweit betrifft die Erfindung auch die Verwendung dieses Speckimitates für die die Herstellung aller Wurst- und Fleischwaren.

Die Erfindung wird durch das nachfolgende Beispiel näher erläutert.

### Beispiel:

Eine Rezeptur für eine fettarme Dauerbrühwürst mit einem Fettgehalt von weniger als 0,5 Gew.-% wurde wie folgt zusammengestellt:
25 Gew.-% Putenfleisch mit einem maximalen Fettgehalt von 2 Gew.-%
5 Gew.-% Sojaproteinkonzentrat
8 Gew.-% Soja-Eiweißextrudat
21 Gew.-% Wasser
25 Gew.-% Speckimitat
2 Gew.-% jodiertes Nitritpökelsalz
2 Gew.-% Gewürze
1,6 Gew.-% Zucker
0,3 Gew.-% Farbstoff
0,1 Gew.-% Säuerungsmittel

Das Speckimitat bestand aus je 10 Gew.-% Milch- und 3 Gew.-% Eieiweiß, 20 Gew.-% Sojaeiweiß, die in 67 Gew.-% Wasser emulgiert und nach kurzem Erhitzen auf 70°C bei -4°C in Würfel von 1,5 mm Kantenlänge zerschnitten wurde.

Die Mischung wurde in einem Kutter zusammengestellt, wobei zunächst das Fleisch gekuttert wurde und während des Kuttems die übrigen Bestandteile in der oben genannten Reihenfolge zugemischt wurden. Nach der Vermischung und dem Erreichen der gewünschten Konsistenz wurde das Gemisch in Därme gefüllt, 48 h bei Temperaturen zwischen 15 und 25°C gereift, danach auf eine Kemtemperatur von 72°C erhitzt und anschließend auf 4°C abgekühlt.

Das Produkt hatte das typische Aussehen einer Dauerbrühwurst und erweckte beim Verzehr das für eine Dauerwurst üblicher Zusammensetzung übliche Mundgefühl, trotz des wesentlich herabgesetzten Fettanteils von nur 0,45 Gew.-%. Die fertige Wurstmasse zeigte ein akzeptables Bindeverhalten.

## Patentansprüche

1. Fleischprodukt, insbesondere Dauerbrühwurst, mit einem Gehalt von weniger als 0,5 Gew.-% Fett, **dadurch gekennzeichnet, daß** es 30 bis 77 Gewichtsteile Fleischmasse, 10 bis 40 Gewichtsteile Speckimitat, 10 bis 30 Gewichtsteile pflanzliches Eiweiß, 1 bis 2 Gewichtsteile Pökelsalz, 2 bis 6 Gewichtsteile übliche Zutaten und gegebenenfalls zugesetztes Wasser enthält, wobei die Fleischmasse aus 50 bis 100 Gew.-% magerem Fleisch und 0 ois 50 Gew.-% Protein besteht und das Speckimitat 50 bis 70 Gew.-% Wasser, 5 bis 25 Gew.-% Milch- und/oder Eieiweiß und 5 bis 25 Gew.-% pflanzliches Eiweiß enthält.

2. Fleischprodukt nach Anspruch 1, **dadurch gekennzeichnet, daß** es 5 bis 50 Gew.-% Proteinisolat in der Fleischmasse enthält.

3. Fleischprodukt nach Anspruch 2, **dadurch gekennzeichnet, daß** das Proteinisolat Getreide- und/oder Sojaeiweiß enthält.

4. Fleischprodukt nach einem der vorstehenden Ansprüche, **dadurch gekennzeichnet, daß** es 0,1 bis 0,5 Gewichtsteile Säuerungsmittel enthält.

5. Fleischprodukt nach Anspruch 4, **dadurch gekennzeichnet, daß** das Säuerungsmittel Gluconsäure-δ-lacton ist.

6. Fleischprodukt nach einem der vorstehenden Ansprüche, **dadurch gekennzeichnet, daß** das pflanzliche Eiweiß des Fleischprodukts ein Eiweißextrudat mit fleischähnlicher Faserstruktur ist.

7. Fleischprodukt nach einem der vorstehenden Ansprüche, **dadurch gekennzeichnet, daß** das Speckimitat durch Aufquellen der Eiweißbestandteile in Wasser, Erhitzen der Mischung auf eine Temperatur bis etwa 70°C, Abkühlen auf eine Temperatur von -10 bis 10°C und Zerkleinern auf die gewünschte Körnung erhältlich ist.

8. Speckimitat, insbesondere zur Herstellung von Fleischprodukten mit einem Fettgehalt von weniger als 0,5 Gew.-%, **dadurch gekennzeichnet, daß** es durch Aufquellen lassen von 5 bis 25 Gew.-% Milch- und/oder Eieiweiß und 5 bis 25 Gew.-% pflanzlichem Eiweiß in 50 bis 70 Gew.-% Wasser, Erhitzen der aufgequollenen Mischung auf eine Temperatur von bis zu 70°C, Abkühlen auf eine Temperatur von - 10 bis 10°C und Zerkleinern auf die gewünschte Korngröße erhältlich ist.

9. Verfahren zur Herstellung des Speckimitats nach Anspruch 8, **dadurch gekennzeichnet, daß** man 5 bis 25 Gew.-% Milch- und/oder Eieiweiß, 5 bis 25 Gew.-% pflanzliches Eiweiß in 50 bis 70 Gew.-% Wasser aufquellen läßt, das Eiweiß durch Erhitzen auf eine Temperatur von bis zu 70°C koaguliert, die erhaltene Mischung auf eine Temperatur von - 10 bis 10°C abkühlt und auf die gewünschte Körnung zerkleinert.

10. Verwendung des Speckimitats von Anspruch 8 oder 9 zur Herstellung von Wurst- und Fleischwaren.

11. Verwendung nach Anspruch 10, **dadurch gekennzeichnet, daß** die Wurst- und Fleischwaren einen Fettgehalt von weniger als 0,5 Gew.-% aufweisen.

## Claims

1. Meat product, particularly long-life boiled sausage, having a fat content of less than 0.5 % by weight, **characterized in that** it contains 30 to 77 parts by weight of meat mixture, 10 to 40 parts by weight of mock bacon, 10 to 30 parts by weight of vegetable protein, 1 to 2 parts by weight of pickle salt, 2 to 6 parts by weight of customary ingredients and, if necessary, added water, with the meat mixture consisting 50 to 100 % by weight of lean meat and 0 to 50 % by weight of protein and the mock bacon containing 50 to 70 % water, 5 to 25 % by weight protein of milk and/or egg and 5 to 25 % by weight vegetable protein.

2. Meat product according to claim 1, **characterized in that** it contains 5 to 50 % by weight protein isolate in the meat mixture.

3. Meat product according to claim 2, **characterized in that** the protein isolate contains protein of cereals and/or soy.

4. Meat product according to any of the above claims, **characterized in that** it contains 0.1 to 0.5 parts by weight of souring agent.

5. Meat product according to claim 4, **characterized in that** the souring agent is glucono-δ-lacton.

6. Meat product according to any of the above claims, **characterized in that** the vegetable protein of the meat product is a protein extrudate having a meat-like fibrous structure.

7. Meat product according to any of the above claims, **characterized in that** the mock bacon is obtained by the swelling of the protein constituents in water, heating the mixture to a temperature of about 70°C, cooling it down to a temperature of between -10 and 10°C and reducing it to the desired grain size.

8. Mock bacon, particularly for the production of meat products having a fat content of less than 0.5 % by weight, **characterized in that** it can be obtained by allowing 5 to 25 % by weight of milk and/or egg protein and 5 to 25 % by weight of vegetable protein to undergo swelling in 50 to 70 % by weight of water, heating the swollen mixture to a temperature of up to 70°C, cooling it down to a temperature ranging between -10 to 10°C and reducing it to the desired grain size.

9. Method for the production of the mock bacon according to claim 8, **characterized in that** 5 to 25 % by weight of milk and/or egg protein, 5 to 25 % by weight of vegetable protein is allowed to swell in 50 to 70 % by weight of water, the protein coagulates when heated to a temperature of up to 70°C, the mixture thus obtained cools down to a temperature ranging between -10 and 10°C and is reduced to the desired grain size.

10. Use of the mock bacon according to claim 8 or 9 for the production of sausage and meat products.

11. Use according to claim 10, **characterized in that** the sausage and meat products have a fat content of less than 0.5 % by weight.

## Revendications

1. Produit à base de viande, en particulier du saucisson cuit, avec une teneur en matières grasses inférieure à 0,5 % en poids, **caractérisé par le fait que** le produit est composé de 30 à 77 % en poids d'un mélange de viande, de 10 à 40 % en poids d'un succédané du lard, de 10 à 30 % en poids de protéines végétales, de 1 à 2 % en poids de sel de salaison, de 2 à 6 % en poids des ingrédients habituels avec, le cas échéant, de l'eau en supplément, le mélange de viande étant constitué de 50 à 100 % en poids de viande maigre et de 0 à 50 % en poids de protéines, le succédané du lard contenant 50 à 70 % en poids d'eau, 5 à 25 % en poids de protéines du lait et/ou de l'oeuf et 5 à 25 % en poids de protéines végétales.

2. Produit à base de viande selon la revendication 1, **caractérisé par** un mélange de viande contenant de 5 à 50 % en poids d'isolat de protéines.

3. Produit à base de viande selon la revendication 2, **caractérisé par le fait que** l'isolat de protéines contient des protéines de céréales et/ou de soja.

4. Produit à base de viande selon l'une des revendications précédentes, **caractérisé par le fait qu'**il contient de 0,1 à 0,5 % en poids d'acidifiants.

5. Produit à base de viande selon la revendication 4, **caractérisé par le fait que** l'agent acidifiant utilisé est la glucono-δ-lactone.

6. Produit à base de viande selon l'une des revendications précédentes, **caractérisé par le fait que** les protéines végétales du produit à base de viande sont un extrudat protéique dont la structure fibreuse est semblable à celle de la viande.

7. Produit à base de viande selon l'une des revendications précédentes, **caractérisé par le fait que** le succédané du lard est obtenu par macération des composants protéiques dans l'eau, la cuisson du mélange jusqu'à une température d'environ 70°C, le refroidissement à une température de -10 à 10°C et le broyage permettant d'obtenir le grain souhaité.

8. Succédané du lard, notamment pour la fabrication de produits à base de viande avec une teneur en matières grasses inférieure à 0,5 % en poids, **caractérisé par le fait qu'**il est obtenu par macération de 5 à 25 % en poids de protéines de lait et/ou de 5 à 25 % en poids de protéines végétales dans 50 à 70 % en poids d'eau, le mélange macéré étant ensuite cuit à une température de 70°C, puis refroidi à une température de -10 à 10°C, et enfin broyé afin d'obtenir le grain souhaité.

9. Procédé de fabrication du succédané du lard selon la revendication 8, **caractérisé par** la macération de 5 à 25 % en poids de protéines du lait et/ou de l'oeuf, 5 à 25 % en poids de protéines végétales dans 50 à 70 % en poids d'eau ; caractérisé également par la coagulation des protéines sous l'effet de la chaleur jusqu'à une température de 70°C, par le refroidissement du mélange ainsi obtenu à une température de -10 à 10°C, ainsi que par le broyage qui permet d'obtenir le grain souhaité.

10. Utilisation du succédané du lard selon la revendication 8 ou 9, pour la fabrication de préparations de viande et de charcuterie.

11. Utilisation selon la revendication 10, **caractérisée par le fait que** la teneur en matières grasses des préparations de viande et de la charcuterie est inférieure à 0,5 % en poids.
